# FASCICULE DE BREVET EUROPEEN

(11) **EP 1 422 520 B1**
(45) Date de publication et mention de la délivrance du brevet: **21.06.2006**
(21) Numéro de dépôt: 03291982.1
(22) Date de dépôt: 07.08.2003
(51) Int. Cl.: G01N 29/24, G21C 17/003

(54) **Sonde de contrôle d'une paroi interne d'un conduit**
Sensor zur Überwachung die innere Wand eines Rohres
Sensor for monitoring the inner wall of a pipe

(30) Priorité: 20.11.2002 FR 0214542
(43) Date de publication de la demande: 26.05.2004
(73) Titulaire: Framatome ANP, 92400 Courbevoie (FR)
(72) Inventeur: Petit, Michel, 71880 Chatenoy Le Royal (FR); Burat, Olivier, 71640 Givry (FR)
(74) Mandataire: Lanceplaine, Jean-Claude

(56) Documents cités:
- EP-A- 0 806 660
- US-A- 4 981 044
- US-A- 5 503 019
- US-A- 5 652 387

## Description

La présente invention concerne une sonde de contrôle non destructif d'une paroi interne d'un conduit et en particulier d'une paroi interne d'un conduit de centrale nucléaire.

L'invention concerne également un train de sondes comportant plusieurs sondes de contrôle.

Dans de nombreuses installations industrielles, il est nécessaire d'effectuer périodiquement une inspection de la paroi interne des conduits afin d'en vérifier l'intégrité pour accroître la fiabilité et la sécurité de leur fonctionnement. Les exploitants sont donc amenés à effectuer des contrôles de plus en plus nombreux, par exemple, au niveau des zones de raccordement des différents éléments et, le cas échéant, des réparations de défauts qui ont pu être décelés.

C'est le cas, par exemple, des parois internes des pénétrations de fond de cuve des centrales nucléaires à eau pressurisée.

En effet, ces pénétrations de fond de cuve comportent une extrémité en saillie sous le fond bombé qui est reliée à un conduit de mesure souple permettant de joindre le fond de la cuve à une salle d'instrumentation disposée dans la structure du bâtiment du réacteur. Chacun des conduits et la pénétration de fond de cuve correspondante assurent le passage d'un doigt de gant dans lequel se déplace une sonde de mesure.

De manière à augmenter la fiabilité de fonctionnement des réacteurs nucléaires, il est nécessaire de contrôler l'état des pièces de traversée de fond de cuve pour s'assurer de l'intégrité de ces pièces après un certain temps de fonctionnement du réacteur, en particulier dans la zone où ces pièces de traversée sont soudées sur le fond de la cuve.

C'est le cas également des tubes des générateurs de vapeur équipant les réacteurs nucléaires qui doivent être examinés régulièrement.

Pour effectuer ces opérations de contrôle, il est connu d'utiliser des sondes et notamment des sondes courant à Foucault et des sondes à ultrasons qui sont déplacées le long de la paroi interne du conduit à examiner.

Les sondes utilisées jusqu'à présent et notamment les sondes à ultrasons comportent au moins un palpeur monté dans une enveloppe métallique, sensiblement cylindrique, par exemple, en aluminium ou acier inoxydable, qui comporte des moyens de plaquage de ladite sonde contre la paroi interne du conduit. Ces moyens de plaquage sont constitués par un ressort métallique placé en général au-dessous du palpeur ou par un dispositif de brosses à poils souples disposées le plus souvent de façon radiale pour assurer principalement un centrage de la sonde dans le conduit. Un moyen de plaquage constitué de ressorts métalliques est présenté dans la document US 5,503,019. La sonde de ce dispositif est deplacée à l'endroit voulu avec les ressorts pressés et au moment voulu l'opérateur relache les ressorts et le palpeur vient en contact avec la paroi à examiner.

Un autre type de sonde est couramment utilisé pour le contrôle d'une paroi interne d'un espace annulaire tel qu'une traversée de couvercle de cuve de réacteur nucléaire équipée d'une manchette thermique constituée par un conduit interne coaxial.

Mais, ces types de sondes ne permettent pas d'obtenir un contact uniforme du palpeur contre la paroi interne durant le déplacement dans le conduit du fait des déformations et des irrégularités de la surface de cette paroi interne après quelques années de fonctionnement de l'installation.

Or, la qualité du contrôle est basée sur la qualité du contact du palpeur contre la paroi interne de la zone du conduit à contrôler, si bien que ces défauts de contact se traduisent par des distorsions sur les signaux de contrôle fournis par la sonde.

La présente invention a pour but de proposer une sonde de contrôle qui évite ces inconvénients en réalisant un contact fiable et uniforme du palpeur contre la paroi interne et qui permet d'augmenter la durée de vie de la sonde, tout en réduisant les coûts de fabrication.

L'invention a donc pour objet une sonde de contrôle de la paroi interne d'un conduit, du type comprenant au moins un palpeur monté dans un support déplaçable dans le conduit en appliquant ledit palpeur contre la paroi interne, caractérisée en ce que le support est formé par une coquille moulée sur ledit palpeur et comportant, d'une part, un corps muni d'une fenêtre de positionnement dudit palpeur et, d'autre part, des moyens de plaquage de ce palpeur contre la paroi interne du conduit, venu de moulage avec le corps.

Selon d'autres caractéristiques de l'invention :
- le conduit présente une section transversale circulaire et le corps a une section transversale sensiblement circulaire légèrement inférieure à la section dudit conduit,
- le conduit comporte un conduit interne ménageant avec ledit conduit un espace annulaire et le corps a une section transversale sensiblement en forme de quadrilatère d'épaisseur légèrement inférieure à la largeur de cet espace annulaire.
- les moyens de plaquage comprennent au moins une portion élastique du corps et en saillie par rapport à ce corps, destinée à prendre appui contre la paroi interne du conduit ou contre une paroi interne de l'espace annulaire pour exercer une force dans la direction de la fenêtre et plaquer le palpeur contre ladite paroi interne,
- la force de plaquage exercée par ladite portion élastique sur le palpeur est comprise entre 2 et 25 newtons et de préférence entre 5 et 15 newtons,
- ladite portion élastique s'étend sur au moins une partie de la longueur du corps de la coquille,
- ladite portion élastique s'étend sur toute la longueur du corps de la coquille,
- ladite portion élastique est située sur le corps, à l'opposé de la génératrice de contact du palpeur contre la paroi interne,
- ladite portion élastique est située sur les bords latéraux du corps,
- ladite portion élastique est formée par deux ailettes souples de plaquage,
- les ailettes de plaquage sont disposées à 120° de part et d'autre de la génératrice de contact du palpeur contre la paroi interne,
- la coquille est réalisée en au moins un polymère, par exemple, en polyuréthane,
- la coquille comporte des inserts, par exemple, métalliques,
- le palpeur est un palpeur à ultrasons.

L'invention a également pour objet un train de sondes de contrôle, caractérisé en ce qu'il comprend plusieurs sondes telles que mentionnées ci-dessus, articulées entre elles.

D'autres caractéristiques et avantages à l'invention apparaîtront à la lecture de la description qui va suivre, donnée à titre d'exemple et faite en référence aux dessins annexés, sur lesquels :
- la figure 1 est une vue schématique en coupe longitudinale d'une sonde de contrôle, conforme à l'invention,
- la figure 2 est une vue en coupe transversale selon la ligne 2.2 de la figure 1,
- la figure 3 est une vue en coupe transversale d'une variante de la sonde de contrôle, conforme à l'invention.
- la figure 4 est une vue schématique de face d'une variante d'une sonde de contrôle, conforme à l'invention,
- la figure 5 est une vue schématique en coupe selon la ligne 5-5 de la figure 4.

La sonde de contrôle, conforme à l'invention, qui est schématiquement représentée sur les figures, est destinée, par exemple, au contrôle ultrasonore d'une paroi interne 2 d'un conduit 1, par exemple, des parois internes des pénétrations de fond de cuve des centrales nucléaires à eau pressurisée.

La sonde de contrôle désignée dans son ensemble par la référence 10 est conçue de façon à pouvoir être introduite dans le conduit 1 et comprend, dans l'exemple de réalisation représentée sur les figures, un palpeur ultrasonore émetteur- récepteur 11.

Selon une variante, la sonde 10 peut comporter plusieurs palpeurs 11.

Le palpeur 11 est monté dans un support qui est formé par une coquille 12 moulée sur ledit palpeur et comportant, d'une part, un corps 13 et, d'autre part, des moyens 14 de plaquage dudit palpeur 11 contre la paroi interne du conduit 1.

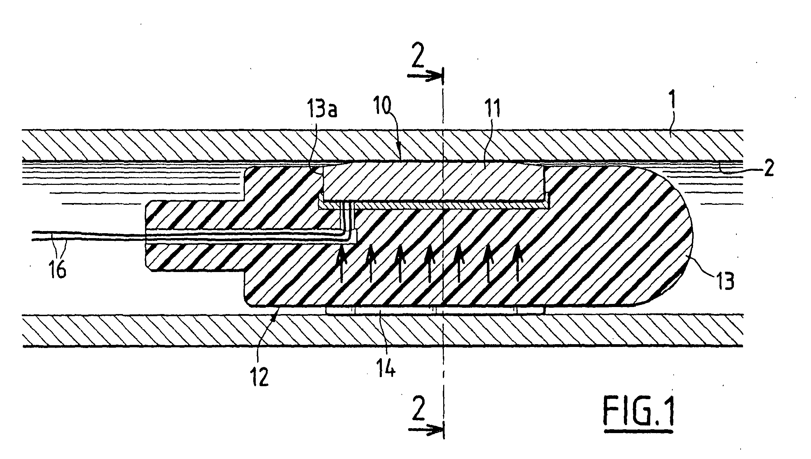

Selon un premier mode de réalisation représenté sur les Figs. 1 à 3, le conduit 1 présente un profil interne circulaire et le corps 13 présente également un profil externe circulaire de section légèrement inférieure à la section interne dudit conduit 1. Le corps 13 présente une fenêtre 13a de positionnement du palpeur 11 de telle manière que la face externe de ce palpeur 11 déborde très légèrement de la face externe du corps 13 de la coquille 12.

Dans tous les cas, le corps 13 de la sonde 10 présente un profil externe de forme complémentaire au profil interne du conduit 1, mais une section légèrement inférieure à la section interne de ce conduit 1.

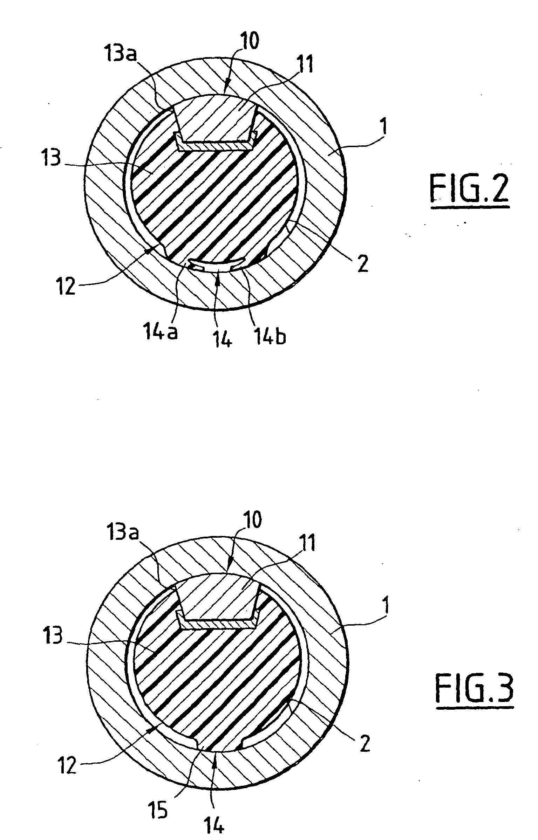

Ainsi que montré, notamment sur les figures 2 et 3, les moyens 14 de plaquage sont venus de moulage avec le corps 13 et la coquille 12 constituée par le corps 13 et les moyens 14 de plaquage forme une pièce monobloc.

D'une manière générale, les moyens de plaquage comprennent au moins une portion 14 élastique du corps 13 et en saillie par rapport à ce corps, destinée, comme représenté sur les figures, à prendre appui sur la paroi interne 2 du conduit 1 pour exercer une force dans la direction de la fenêtre 13a et plaquer le palpeur 11 contre cette paroi interne 2.

De préférence, la force de plaquage exercée par la portion élastique 14 sur le palpeur 11 est comprise entre 2 et 25 newtons, de préférence entre 5 et 15 newtons, et cette portion élastique 14 est située sur le corps 13 à l'opposé de la génératrice de contact du palpeur 11 contre la paroi interne 2 selon une disposition diamétrale.

La portion élastique 14 peut s'étendre sur au moins une partie de la longueur du corps 13, ainsi que représenté à la figure 1, ou peut s'étendre sur toute la longueur de ce corps 13 ou encore peut être constituée par plusieurs portions réparties sur la longueur dudit corps 13.

Selon un mode de réalisation préférentielle représenté à la figure 2, la portion élastique 14 est formée par deux ailettes souples, respectivement 14a et 14b, venues de matière avec le corps 13 et dont l'extrémité libre est en appui sur la paroi interne 2 afin d'exercer chacune une force de plaquage dont la résultante est dirigée vers la fenêtre 13a du corps 13 pour plaquer le palpeur 11 contre la paroi interne 2 du conduit 1. Les ailettes 14a et 14b sont disposées, de part et d'autre de la génératrice de contact du palpeur 11 contre la paroi interne 2, de préférence à 120°.

Selon une variante représentée à la figure 3, la portion élastique 14 est constituée d'au moins un bourrelet 15 qui, lorsque la coquille 12 est introduite dans le conduit 1, est comprimé et exerce une force dirigée vers la fenêtre 13a du corps 13 pour plaquer le palpeur 11 contre la paroi interne 2 de ce conduit 1.

La portion élastique 14 peut avoir d'autres formes et la condition principale à remplir réside dans le fait que la différence entre la section interne du conduit 1 et la section externe du corps 13 doit être déterminée pour que la portion élastique 14 soit comprimée quand la sonde est introduite dans le conduit 1 et exerce sur le palpeur 11 une force de plaquage contre la paroi interne 2.

Le palpeur 11 est relié à un ensemble de traitement des informations par des fils 16 qui débouchent à l'extérieur de la coquille 12 et qui peuvent servir de câble de traction de la sonde 10 à l'intérieur du conduit 2.

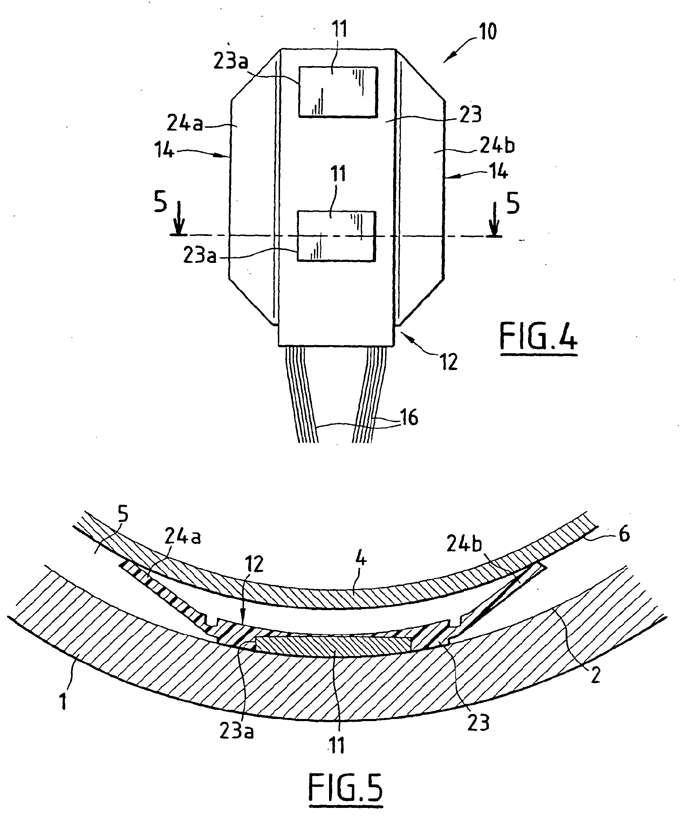

Sur les Figs 4 et 5, on a représenté une variante d'utilisation de la sonde conforme à l'invention et qui réside dans le contrôle d'une paroi interne 2 d'un espace annulaire.

Ainsi que montré à la Fig. 5, le conduit 1 comporte un conduit interne 4 coaxial audit conduit 1 et qui ménage avec ce dernier un espace annulaire 5 délimité par la paroi interne du conduit 1 et la paroi externe 6 du conduit 4.

Dans ce cas, la coquille 12 comporte un corps 23 ayant une section transversale sensiblement en forme de quadrilatère d'épaisseur légèrement inférieure à la largeur de l'espace annulaire 5. Le corps 23 présente aussi une fenêtre 23a de positionnement du palpeur 11 et dans l'exemple de réalisation représenté sur les Figs. 4 et 5, deux fenêtres 23a de positionnement de deux palpeurs 11.

Les moyens 14 de plaquage sont également venus de moulage avec le corps 23 et sont formés par deux ailettes souples 24a et 24b situées sur les bords latéraux de ce corps 23. Ces ailettes 24a et 24b peuvent s'étendre sur une partie ou sur la totalité de la longueur du corps 23.

Pour effectuer le contrôle de la paroi interne 2 de l'espace annulaire 5, les ailettes 24a et 24b prennent appui sur la paroi 6 de cet espace annulaire 5, c'est à dire sur la paroi externe 6 du conduit interne 4, afin d'exercer une force de plaquage dirigée vers la paroi 2 et plaquer les palpeurs 11 contre cette paroi 2.

Pour effectuer le contrôle de la paroi interne 6 de l'espace annulaire 5, les ailettes 24a et 24b prennent appui sur la paroi 2 de cet espace annulaire 5, c'est à dire sur la paroi interne 2 du conduit externe 1, afin d'exercer une force de plaquage dirigée vers la paroi 6 et plaquer les palpeurs 11 contre cette paroi 6.

La coquille 12 est réalisée en polymère, par exemple en polyuréthane, et elle peut comporter des inserts métalliques noyés dans le polymère. Selon une variante, la coquille 12 peut être réalisée en plusieurs polymères différents compatibles les uns avec les autres.

Les procédés de moulage pour réaliser la coquille 12 sont de type connu, comme par exemple le moulage par gravité, ou par injection, ou encore à moule perdu.

Au cours du déplacement de la sonde 10 à l'intérieur du conduit 1 pour contrôler la paroi interne 2, la portion élastique 14 assure un plaquage uniforme du palpeur 11 et cela malgré les déformations et les irrégularités de la surface de la paroi interne 2.

Selon une variante, le corps 13 ou 23 de la coquille 12 peut comporter un ou plusieurs logements ménagés de ce corps pour le positionnement de divers composants.

Par ailleurs, la sonde 10 peut être associée à d'autres sondes reliées entre elles de manière articulée par exemple par un système à cardans ou bien par un système du type "diabolo" ou "silent-bloc" pour constituer un train de sondes déplaçable dans le conduit à contrôler.

La conception de la sonde, selon l'invention, permet une réduction des coûts de fabrication, une simplification mécanique par rapport aux sondes utilisées jusqu'à présent et une amélioration de la fiabilité et de la durée de vie de la sonde de contrôle.

## Revendications

1. Sonde de contrôle d'une paroi interne (2 ; 6) d'un conduit (1), du type comprenant au moins un palpeur (11) monté dans un support déplaçable dans le conduit en appliquant ledit palpeur (11) contre la paroi interne (2 ; 6), **caractérisée en ce que** le support est formé par une coquille (12) moulée sur ledit palpeur (11) et comportant, d'une part, un corps (13 ; 23) muni d'au moins d'une fenêtre (13a ; 23a) de positionnement dudit palpeur (11) et, d'autre part, des moyens (14) de plaquage de ce palpeur (11) contre la paroi interne (2 ; 6), venus de moulage avec le corps (13 ; 23).

2. Sonde de contrôle selon la revendication 1, **caractérisée en ce que** le conduit (1) présente une section transversale circulaire et le corps (13) a une section transversale sensiblement circulaire légèrement inférieure à la section dudit conduit (1).

3. Sonde de contrôle selon la revendication 1, **caractérisée en ce que** le conduit (1) comporte un conduit interne (4) ménageant avec ledit conduit (1) un espace annulaire (5) et le corps (23) a section transversale sensiblement en forme de quadrilatère d'épaisseur légèrement inférieure à la largeur de cet espace.

4. Sonde de contrôle selon l'une quelconque des revendications 1 à 3, **caractérisée en ce que** les moyens de plaquage comprennent au moins une portion élastique (14) du corps (13 ; 23) et en saillie par rapport à ce corps (13 ; 23), destinée à prendre appui contre la paroi interne (2) du conduit (1) ou contre une paroi interne (2 ; 6) de l'espace annulaire (5), pour exercer une force dans direction de la fenêtre (13a ; 23a) et plaquer le palpeur (11) contre ladite paroi interne (2 ; 6).

5. Sonde de contrôle selon la revendication 4, **caractérisée en ce que** la force de plaquage exercée par ladite portion élastique (14) sur le palpeur (11) est comprise entre 2 et 25 newtons et de préférence entre 5 et 15 newtons.

6. Sonde de contrôle selon l'une quelconque des revendication 4 ou 5 **caractérisée en ce que** ladite portion élastique (14) s'étend sur au moins une partie de la longueur du corps (13 ; 23) de la coquille (12).

7. Sonde de contrôle selon l'une quelconque des revendication 4 ou 5, **caractérisée en ce que** ladite portion élastique (14) s'étend sur toute la longueur du corps (13 ; 23) de la coquille (12).

8. Sonde de contrôle selon l'une quelconque des revendications 4 à 7, **caractérisée en ce que** ladite portion élastique (14) est située sur le corps à l'opposé de la génératrice de contact du palpeur (11) contre la paroi interne (2).

9. Sonde de contrôle selon l'une des revendications 4 à 7, **caractérisée en ce que** ladite portion élastique (14) est située sur les bords latéraux du corps (23).

10. Sonde de contrôle selon la revendication 8 ou 9, **caractérisée en ce que** ladite portion élastique (14) est formée par deux ailettes souples de plaquage (14a, 14b ; 24a, 24b).

11. Sonde de contrôle selon la revendication 8 ou 10, **caractérisée en ce que** les ailettes de plaquage (14a, 14b) sont disposées à 120° de part et d'autre de la génératrice de contact du palpeur (11) contre la paroi interne (2).

12. Sonde de contrôle selon l'une quelconque des revendications 1 à 11, **caractérisée en ce que** la coquille (12) est réalisée en au moins un polymère, par exemple, en polyuréthane.

13. Sonde de contrôle selon la revendication 12, **caractérisée en ce que** la coquille (12) comporte des inserts, par exemple métalliques.

14. Sonde de contrôle selon l'une quelconque des revendications 1 à 13, **caractérisée en ce que** le palpeur (11) est un palpeur à ultrasons.

15. Train de sondes de contrôle, **caractérisé en ce qu'**il comprend plusieurs sondes selon l'une quelconques des revendications 1 à 14, articulées entre elles.

## Claims

1. Sensor for monitoring an inside wall (2; 6) of a pipe (1) of the type comprising at least one detector (11) mounted in a support, which is displaceable in the pipe applying said detector (11) against the inside wall (2; 6), **characterised in that** the support is formed by a shell (12) moulded onto said detector (11) and comprising, on one side, a body (13; 23) provided with at least one slot (13a; 23a) for positioning said detector (11) and, on the other side, means (14) moulded to the body (13; 23) for pressing this detector (11) against the inside wall (2; 6).

2. Monitoring sensor according to Claim 1, **characterised in that** the pipe (1) has a circular cross-section and the body (13) has an essentially circular cross-section slightly smaller than the cross-section of said pipe (1).

3. Monitoring sensor according to Claim 1, **characterised in that** the pipe (1) has an internal pipe (4), which with said pipe (1) forms an annular space (5), and the body (23) has an essentially quadrilateral-shaped cross-section with a slightly smaller thickness than the width of said space.

4. Monitoring sensor according to any one of Claims 1 to 3, **characterised in that** the pressing means comprise at least one elastic portion (14) of the body (13; 23) projecting from said body (13; 23) to come into abutment against the inside wall (2) of the pipe (1) or against an inside wall (2; 6) of the annular space (5) to exert a force towards the gap (13a; 23a) and press the detector (11) against said inside wall (2; 6).

5. Monitoring sensor according to Claim 4, **characterised in that** the pressing force exerted by said elastic portion (14) on the detector (11) lies in the range of between 2 and 25 newtons and preferably 5 and 15 newtons.

6. Monitoring sensor according to any one of Claims 4 or 5, **characterised in that** said elastic portion (14) extends over at least a section of the length of the body (13; 23) of the shell (12).

7. Monitoring sensor according to any one of Claims 4 or 5, **characterised in that** said elastic portion (14) extends over the entire length of the body (13; 23) of the shell (12).

8. Monitoring sensor according to any one of Claims 4 to 7, **characterised in that** said elastic portion (14) is located on the body opposite the line of contact of the detector (11) against the inside wall (2).

9. Monitoring sensor according to one of Claims 4 to 7, **characterised in that** said elastic portion (14) is located on the side edges of the body (23).

10. Monitoring sensor according to Claim 8 or 9, **characterised in that** said elastic portion (14) is formed by two flexible pressing fins (14a, 14b; 24a, 24b).

11. Monitoring sensor according to Claim 8 or 10, **characterised in that** the pressing fins (14a, 14b) are arranged at 120° on either side of the line of contact of the detector (11) against the inside wall (2).

12. Monitoring sensor according to any one of Claims 1 to 11, **characterised in that** the shell (12) is made from at least one polymer, e.g. polyurethane.

13. Monitoring sensor according to Claim 12, **characterised in that** the shell (12) comprises inserts, e.g. metal inserts.

14. Monitoring sensor according to any one of Claims 1 to 13, **characterised in that** the detector (11) is an ultrasonic detector.

15. Array of monitoring sensors, **characterised in that** it comprises several sensors according to any one of Claims 1 to 14 pivoted to one another.

## Patentansprüche

1. Sonde zur Kontrolle einer Innenwand (2; 6) einer Leitung (1), die wenigstens einen Fühler (11) umfasst, der in einen in der Leitung verschiebbaren Träger eingebaut ist, der den genannten Fühler (11) gegen die Innenwand (2; 6) drückt,
**dadurch gekennzeichnet, dass** der Träger durch eine auf den genannten Fühler (11) gegossene Schale (12) gebildet wird, die einerseits einen Rumpf (13; 23) mit einem Fenster (13a; 23a) zur Positionierung des genannten Fühlers (11) und andererseits mit dem Rumpf (13; 23) mitgegossene Einrichtungen (14) umfasst.

2. Kontrollsonde nach Anspruch 1, **dadurch gekennzeichnet, dass** die Leitung (1) einen kreisrunden Querschnitt hat, und der Rumpf (13) einen im Wesentlichen kreisrunden Querschnitt hat, der etwas kleiner ist als der Querschnitt der Leitung (1).

3. Kontrollsonde nach Anspruch 1, **dadurch gekennzeichnet, dass** die Leitung (1) eine innere Leitung (4) enthält, die zusammen mit der genannten Leitung (1) einen ringförmigen Raum (5) ausspart, und der Rumpf (23) einen Querschnitt mit im Wesentlichen der Form eines Trapezoids hat, dessen Dicke etwas kleiner ist als die Breite dieses Raums.

4. Kontrollsonde nach einem der Ansprüche 1 bis 3, **dadurch gekennzeichnet, dass** die Andrückeinrichtungen wenigstens einen elastischen Teil (14) des Rumpfs (13; 23) umfassen, der in Bezug auf diesen Rumpf (13; 23) vorsteht und dazu bestimmt ist, sich auf der Innenwand (2) der Leitung (1) oder auf einer Innenwand (2; 6) des ringförmigen Raums (5) abzustützen, um in Richtung des Fensters (13a; 23a) eine Kraft auszuüben und die Sonde (11) gegen die genannte Innenwand (2; 6) zu drücken.

5. Kontrollsonde nach Anspruch 4, **dadurch gekennzeichnet, dass** die durch den genannten elastischen Teil (14) auf die Sonde (11) ausgeübte Kraft zwischen 2 und 25 N und vorzugsweise zwischen 5 und 15 N enthalten ist.

6. Kontrollsonde nach einem der Ansprüche 4 oder 5, **dadurch gekennzeichnet, dass** der genannte elastische Teil (14) sich wenigstens über einen Teil der Länge des Rumpfs (13; 23) der Schale (12) erstreckt.

7. Kontrollsonde nach einem der Ansprüche 4 oder 5, **dadurch gekennzeichnet, dass** der genannte elastische Teil (14) sich über die gesamte Länge des Rumpfs (13; 23) der Schale (12) erstreckt.

8. Kontrollsonde nach einem der Ansprüche 4 bis 7, **dadurch gekennzeichnet, dass** der elastische Teil (14) des Rumpfs der Kontakt-Mantellinie der Sonde (11) mit der Innenwand (2) entgegengesetzt ist.

9. Kontrollsonde nach einem der Ansprüche 4 bis 7, **dadurch gekennzeichnet, dass** der elastische Teil (14) sich auf den Seitenrändem des Rumpfes (23) befindet.

10. Kontrollsonde nach Anspruch 8 oder 9, **dadurch gekennzeichnet, dass** der elastische Teil (14) durch zwei nachgiebige Andrückflügel (14a, 14b; 24a, 24b) gebildet wird.

11. Kontrollsonde nach Anspruch 8 oder 10, **dadurch gekennzeichnet, dass** die Andrückflügel (14a, 14b) beiderseits der Kontakt-Mantellinie der Sonde (11) mit der Innenwand (2) um 120° versetzt sind.

12. Kontrollsonde nach Anspruch 1 bis 11, **dadurch gekennzeichnet, dass** die Schale (12) aus wenigstens einem Polymer, zum Beispiel Polyurethan, ist.

13. Kontrollsonde nach Anspruch 12, **dadurch gekennzeichnet, dass** die Schale (12) Einsätze bzw. Einspritzteile, zum Beispiel metallische, umfasst.

14. Kontrollsonde nach Anspruch 1 bis 13, **dadurch gekennzeichnet, dass** der Fühler (11) ein Ultraschallfühler ist.

15. Kontrollsondenkette, **dadurch gekennzeichnet, dass** sie mehrere gelenkig miteinander verbundene Sonden nach einem der Ansprüche 1 bis 14 umfasst.
